# EUROPEAN PATENT APPLICATION

(11) **EP 2 159 434 A1**
(43) Date of publication of application: **03.03.2010**
(21) Application number: 08751656.3
(22) Date of filing: 01.05.2008
(51) Int. Cl.: F16C 9/02, F16C 17/02, F16C 33/10

(54) **BEARING METAL**

(30) Priority: 17.05.2007 JP 2007131102
(71) Applicant: Hitachi Zosen Corporation, Osaka-shi, Osaka 559-8559 (JP)
(72) Inventor: SUGIMOTO, Iwao, Osaka-shi, Osaka 559-8559 (JP)
(74) Representative: Engelhardt, Harald
(86) International application number: PCT/JP2008/001131
(87) International publication number: WO 2008/142830

(57) **Abstract**

A bearing metal 11 for supporting a rotating shaft body, that is composed of an upper split metal and a lower split metal, and has a lubrication groove formed in the circumferential direction in an inner circumferential surface. As for the lubrication groove formed on the upper split metal 12 side, in a case where the direction of maximum displacement of the rotating shaft body is above a mating plane S of the upper and lower split metals 12, 13, an upper lubrication groove 14 is not disposed from the mating plane in the direction of maximum displacement to a portion N above a vicinity M of the mating plane- As for the lubrication groove formed on the lower split metal 13 side, a lower lubrication groove 15 is disposed in the vicinity M of the mating plane on the opposite side to the direction of maximum displacement.

## Description

### TECHNICAL FIELD

The present invention relates to a bearing metal provided in the bearing of a crankshaft, for example, in the main engine of a ship.

### BACKGROUND ART

A sliding bearing is usually used as a bearing that supports a journal (referred to hereinbelow as "a shaft body") of a crankshaft of a large diesel engine that is the main engine of a ship. A bearing metal having a vertically split structure composed of an upper split metal and a lower split metal is provided on the inside of the sliding bearing, and a lubrication groove is obviously formed in the bearing metal.

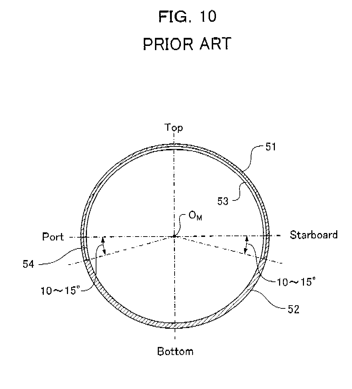

The formation range of the lubrication groove of this type is as follows. As shown in FIG. 10, an upper lubrication groove 53 is formed in the entirely of an upper split metal 51 (the entire length of the half circumference), and lower lubrication grooves 54 are formed in a predetermined range [at about 10 to 15° (circular arc angle with respect to a shaft body center O_{M}) from a mating plane S] at both ends of a lower split metal 52.

The above-described lubrication grooves 53, 54 formed in the inner circumferential surface of the bearing metal of the sliding bearing in the diesel engine are formed in the entirety of the upper split metal 51 and in the proximity of both ends of the lower split metal 52, but the problem is that peeling occurs in the vicinity of the mating plane s of the upper and lower split metals 51, 52.

### DISCLOSURE OF THE INVENTION

Accordingly, it is an object of the present invention to provide a bearing metal that can prevent the occurrence of peeling.

In order to resolve the above-described problem, a bearing metal according to a first aspect of the present invention is a bearing metal that has a vertically split structure composed of an upper split metal and a lower split metal, supports a rotating shaft body, and has a lubrication groove formed in an inner circumferential surface, wherein
in a case where the direction of maximum displacement of the rotating shaft body in a plane perpendicular to the rotation axis of the rotating shaft body during the rotation of the rotating shaft body is in the vicinity of the mating plane of the upper and lower split metals, the lubrication groove formed in the circumferential direction on the upper split metal side is not disposed at least in the vicinity of the mating plane, and
the lubrication groove formed in the circumferential direction on the lower split metal side is disposed in the vicinity of the mating plane on the opposite side to the direction of maximum displacement.

A bearing metal according to a second aspect is a bearing metal that has a vertically split structure composed of an upper split metal and a lower split metal, supports a rotating shaft body, and has a lubrication groove formed in an inner circumferential surface, wherein
in a case where the direction of maximum displacement of the rotating shaft body in a plane perpendicular to the rotation axis of the rotating shaft body during the rotation of the rotating shaft body is above the mating plane of the upper and lower split metals, the lubrication qroove formed in the circumferential direction on the upper split metal side is not disposed at least from the mating plane in the direction of maximum displacement to an upper portion that is above the vicinity of the mating plane.

A bearing metal according to a third aspect is a bearing metal that has a vertically split structure composed of an upper split metal and a lower split metal, supports a rotating shaft body, and has a lubrication groove formed in an inner circumferential surface, wherein
in a case where the direction of maximum displacement of the rotating shaft body in a plane perpendicular to the rotation axis of the rotating shaft body during the rotation of the rotating shaft body is above the mating plane of the upper and lower split metals, the lubrication groove formed in the circumferential direction on the upper split metal side is not disposed at least from the mating plane in the direction of maximum displacement to an upper portion above the vicinity of the mating plane, and
the lubrication groove formed in the circumferential direction on the lower split metal side is disposed in the vicinity of the mating plane on the opposite side to the direction of maximum displacement.

A bearing metal according to a fourth aspect is the bearing metal according to any one of the first to third aspects, wherein the direction of maximum displacement is within the range in which an eccentricity of the rotating shaft body with respect to the bearing metal is equal to or more than 0.9.

A bearing metal according to a fifth aspect is the bearing metal according to any one of the first to three aspects, wherein the vicinity of the mating plane is within a range of substantially ±10° with respect to the mating plane.

A bearing metal according to a sixth aspect is the bearing metal according to the second or third aspect, wherein the upper portion is within a range that is further substantially 10° from the vicinity of the mating plane.

With the configuration of the bearing metal according to the first aspect, in the case where the rotating shaft body is displaced in the plane perpendicular to the rotation axis of the rotating shaft body during the rotation of the rotating shaft body and the direction of maximum displacement is in the vicinity of the mating plane of the upper a.nd lower split metals, the lubrication groove formed in the circumferential direction on the upper split metal side is not disposed at least in the vicinity of the mating plane. Therefore, even when friction heat is generated on the maximum displacement direction side, a lubricating oil is not directly supplied. As a result, thermal strains can be reduced, thereby preventing the occurrence of damage such as peeling in the bearing metal.

With the configuration of the bearing metal according to the second and third aspects, in the case where the rotating shaft body is displaced in the plane perpendicular to the rotation axis of the rotating shaft body during the rotation of the rotating shaft body and the direction of maximum displacement is above the vicinity of the mating plane of the upper and lower split metals, the lubrication groove formed in the circumferential direction on the upper split metal side is not disposed in the upper portion. Therefore, even when friction heat is generated in the direction of maximum displacement, a lubricating oil is not directly supplied. As a result, thermal strains can be reduced in the upper portion, thereby preventing the occurrence of damage such as peeling in the bearing metal.

### BRIEF DESCRIPTION OF THE DRAWINGS

FIG. 1 is a schematic view of an engine provided with a bearing having a bearing metal according to an embodiment of the present invention.
FIG. 2 is a perspective view of the bearing metal according to the embodiment.
FIG. 3 is an exploded perspective view according to the embodiment.
FIG. 4 is a side view illustrating the disposition range of a lubrication groove in the bearing metal according to the embodiment.
FIG. 5A shows actually measured values relating to the displacement state of a rotating shaft body with respect to the bearing metal according to the embodiment.
FIG. 5B shows theoretical analysis values relating to the displacement state of the rotating shaft body with respect to the bearing metal according to the embodiment.
FIG. 6 is a cross-sectional view illustrating the eccentricity of the rotating shaft body with respect to the bearing metal according to the embodiment.
FIG. 7 is a schematic side view illustrating the disposition state of the lubrication groove of the bearing metal according to the embodiment.

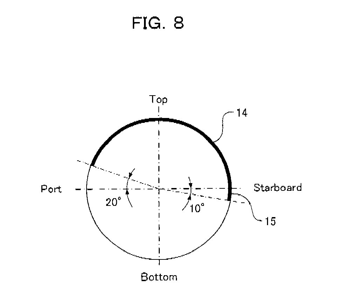

FIG. 8 is a schematic side view illustrating the disposition state of a lubrication groove of a bearing metal of another embodiment of the present invention.
FIG. 9 is a schematic side view illustrating the disposition state of a lubrication groove of a bearing metal of another embodiment of the present invention.
FIG. 10 is a cross-sectional view of a bearing metal of the conventional example.

### BEST MODE FOR CARRYING OUT THE INVENTION

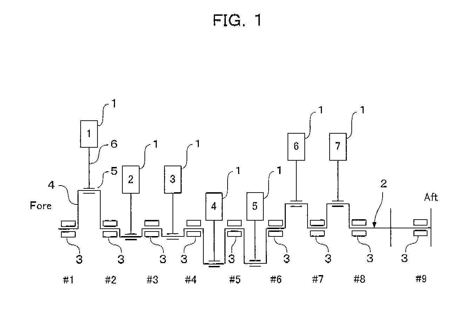

A bearing metal according to the preferred embodiment of the present invention will be explained below based on FIGS. 1 to 7.

The bearing metal of the present embodiment will be explained which is disposed, for example, on the inner surface of a bearing supporting a crankshaft (also referred to as a main bearing) of a large diesel engine for a ship (so-called the main engine) that is installed in a ship.

The configuration of the engine will be schematically explained below. As shown in FIG. 1, the engine has, for example, seven pistons 1. A crankshaft 2 of the engine is supported by eight (#1 to #8) bearings 3, and the rear end portion thereof on the stern side is supported by a bearing 3 (#9) provided on. a. bulkhead. Here, #1 shows the bearing on the bow side (Fore) and #8 shows the bearing on the stern side (Aft). It goes without saying that a crank pin 5 is provided by using crank arms 4 in a position corresponding to each piston 1 of the crankshaft 2, and the crank pin 5 and the piston 1 are linked by a connecting rod 6.

The bearing 3 provided with a bearing metal will be explained below.

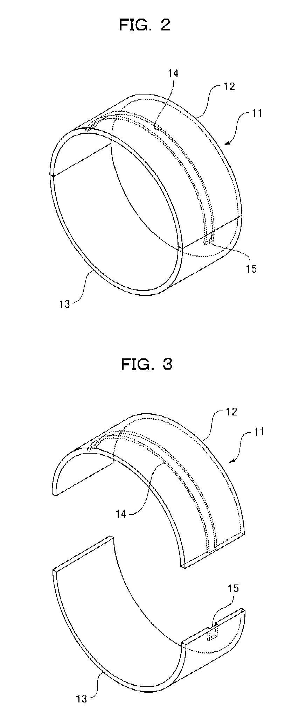

As shown in FIG. 2 and FIG. 3, a bearing metal 11 that rotatably supports the journal (an example of a rotating shaft body; it will be referred to hereinbelow as a shaft body and will be denoted by reference numeral 2 the same as that of the crankshaft) of the crankshaft 2 is provided inside the bearing 3.

The bearing metal 11 has a vertically split structure and is composed of an upper split metal 12 as an upper-half circumferential portion and a lower split metal 13 as a lower-half circumferential portion.

Upper and lower lubrication grooves 14, 15 of a predetermined width are formed along the circumferential direction in the inner circumferential surfaces of these split metals 12 and 13.

Basic considerations taken into account when the lubrication grooves of the bearing metal are formed (disposed) will be explained below.

The results obtained by examining the peeling state of the bearing metal 11 demonstrates that the peeled part (peeled region) does not necessarily coincide with the direction of a force (load) acting upon the shaft body 2 and that the peeling is caused by thermal strains generated as heating induced by friction of the shaft body 2 and bearing metal 11 (so-called friction heat) and cooling induced by the supply of a lubricating oil are repeated.

The friction heat is considered to be generated by a comparatively large displacement (movement) of the shaft body 2 inside the bearing metal 11 at positions where the oil film is easily ruptured, for example, where the lubricating oil is hardly dragged in, such as a horizontal plane in the proximity of the bearing center and a region above this horizontal plane. Further, as mentioned hereinabove, the position with a large displacement of the shaft body 2 is a position in which the lubricating oil is dragged in and displaced slightly upward in the rotation direction of the shaft body when the shaft body is rotated, and not always a position where the largest load is applied. Taking these factors into account, the position where friction heat is generated is in the vicinity of the so-called mating plane of the bearing 3 and a portion thereabove.

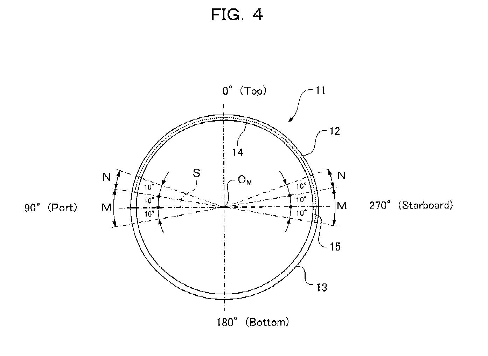

Therefore, in order to prevent peeling, as shown in FIG. 4, the lubricating oil may not be supplied directly to the position where the oil film can be easily ruptured, that is, to a mating plane vicinity M that is close to the horizontal plane and a portion N thereabove.

Thus, by measuring the displacement of the shaft body 2 or conducting a theoretic analysis of the behavior of the shaft body 2 during the rotation of the shaft body 2, it is possible to discover the position with a large displacement (referred to hereinbelow as a direction of maximum displacement) of the shaft body 2 in the mating plane vicinity M and the portion N thereabove, and the methods include a method of actually conducting measurements (referred to hereinbelow as actual measurements) and a method based on the theoretic analysis.

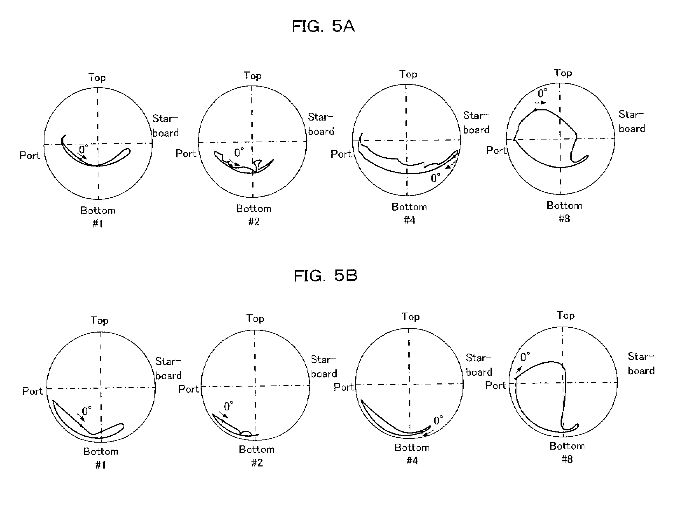

For example, FIG. 5A shows the results obtained by actually measuring the displacement of the shaft body 2 in #1, #2, #4, and #8 bearings 3, and FIG. 5B shows the results obtained by finding the displacement of the shaft body 2 by the theoretic analysis. The displacements shown in FIGS. 5A and 5B indicate the eccentricity.

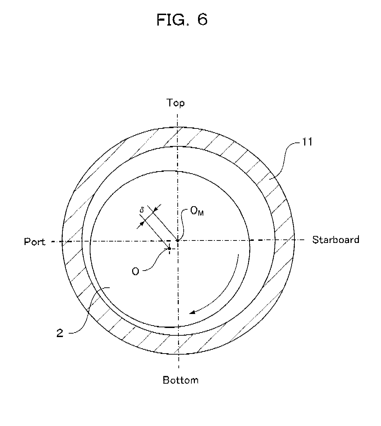

As shown in FIG. 6, the eccentricity represents, using a rotation angle θ of the shaft body 2 as a parameter, the displacement direction of the shaft body 2 and a ratio (δ/c) of a displacement, amount δ of a center O of the shaft body 2 to a radial clearance c of the shaft body 2 with respect to the shaft body 2 and the bearing metal 11 (a radial clearance in a state in which the center O of the shaft body 2 coincides a center O_{M} of the bearing metal 11). In FIG. 5A and FIG. 5B, 0° is represented by "Top", 90° by "Port", 180° by "Bottom", and 270° by "starboard".

In the explanation below, a mating plane (corresponding to the horizontal plane when considered according to the usual disposition state) S of the two split metals 12, 13 represents a plane (in a case where the bearing is disposed correctly, this plane is the horizontal plane) including a left side portion (90°) and a right side portion (270°), the mating plane vicinity M represents a range of substantially ±10° (in other words, a range of 20°; can be also referred to as "a predetermined range") with respect to the left side portion (90°) or the right side portion (270°), that is, the horizontal plane, and the portion N above the mating plane vicinity M represents a range of substantially 10° (can be also referred to as "a predetermined range") (see FIG. 4). The range of "substantially" hereinabove is about ±20%, preferably about ±10%. The angle hereinabove represents a circular arc angle about the center O_{M} of the bearing metal 11 (hereinafter the same).

Both the actual measurement results and the analytical results shown in FIG. 5A and FIG. 5B indicate that the maximum displacement portion (more specifically, a portion with an eccentricity of 0.9 or more) appears in the vicinity M of the mating plane of the upper split metal 14 and lower split metal 15 and that in the #8 bearing 3, this portion appears in the mating plane vicinity M and the portion N thereabove. These results clearly correspond to the peeled part in the conventional bearing metal

Thus, when the maximum displacement portion (position with a large displacement) is situated in the mating plane vicinity M or the portion N thereabove, friction heat is generated due to contact with the bearing metal, and when the lubricating groove is formed in the matting plane vicinity M or the portion N, thermal strains are induced by the cooling function of the lubricating oil and a peeling phenomenon is observed. Therefore, the peeling phenomenon can be prevented by disposing the lubrication groove so that the lubricating oil is not directly supplied to the maximum displacement portion.

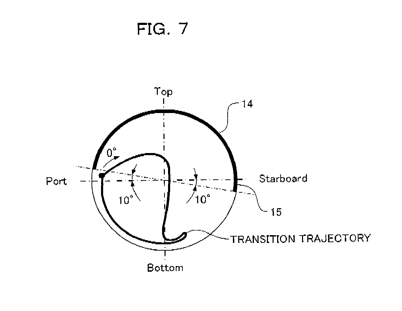

In summary, in a case where the shaft body 2 is displaced in a plane perpendicular to a rotation axis during the rotation of the shaft body 2, as shown in FIG. 7, and the direction of maximum displacement of the rotating shaft body is in the vicinity M of the mating plane of the upper and lower split metals 12, 13, the upper lubrication groove 14 formed in the circumferential direction on the upper split metal 12 side is not formed at least in the vicinity (at up to about 10°) M of the mating plane, and the lower lubrication groove 15 on the lower split metal 13 side is formed in the vicinity (at down around -10°) M of the mating plane on the opposite side to the direction of maximum displacement. The lubrication groove 15 is provided to the vicinity M of the mating plane on the opposite side particularly because it is not necessary to take thermal strains into account.

Further, in a case where the shaft body 2 is displaced in the plane perpendicular to the rotation axis during the rotation of the shaft body 2 and the direction of maximum displacement of the rotating shaft body is above the mating plane S of the upper and lower split metals 12, 13, the upper lubrication groove 14 formed in the circumferential direction on the upper split metal 12 side is not formed at least to the portion N above the vicinity M of the mating plane in the direction of maximum displacement, or in other words, to an angle of 0° to 20°. The lower lubrication groove 15 formed in the circumferential direction on the lower split metal 13 side is formed in the vicinity M of the mating plane on the opposite side to the direction of maximum displacement.

The disposition ranges of the lubrication grooves will be described below more specifically with reference to FIG. 5A and FIG. 5B.

In the #1 bearing 3, the displacement trajectory is within a range of substantially 80° to substantially 265°. In this case, the upper lubrication groove 14 may be formed only on the upper split metal 12 side. Thus, it is not necessary to provided the lubrication groove that is conventionally provided in the lower split metal 13.

In the #2 bearing 3, the displacement trajectory is within a range of substantially 100° to substantially 230°. In this case, the conventional lubrication grooves may be used.

In the #4 bearing 3, the displacement trajectory is within a range of substantially 80° to substantially 260°. In this case, the lubrication grooves 14, 15 may be formed, for example, on the upper split metal 12 side and the right side of the lower split metal 13.

In the #8 bearing 3, the displacement trajectory is substantially along the entire circumference, but where only the trajectory with a large eccentricity is considered, the range is from 40° to substantially 180°. In this case, the upper lubrication groove 14 is not formed, for example, in a portion (in the vicinity of the mating plane) close to the left side portion (90°) of the upper split metal 12, and the lower lubrication groove 15 may be formed in the right side portion of the lower split metal 13.

Therefore, the lubrication groove may be provided in the right side portion (270°) of the lower split metal 13, without providing the lubrication groove in the portion close to the left side portion (90°) of the upper split metal 12.

Thus, to explain the disposition ra.nge (formation range) of the lubrication groove, the lubrication groove is not provided in the range of the vicinity M of the mating plane and the portion N thereabove, wherein the eccentricity of the shaft body 2 is 0.9 or more.

A measurement method and an analytical method (theoretic analysis) using calculations can be used to find the disposition range of the lubrication groove, that is, the axis behavior range. The measurement method requires no explanation, but the analytical method will be briefly explained below. A crankshaft system is replaced with a small number of beam elements, while maintaining the configuration of the journal, crank arm, and crank pin, the mobility method of a short bearing solution is used for the lubrication analysis of the bering, and a transmission matrix method is applied to the coupled analysis of shaft system behavior and lubrication analysis This procedure will be explained below in a simple manner.

(1) First, the inclination of the journal and a bearing load applied to the bearing at a crank angle of 0° are found by a transmission matrix method.

(2) Then, a bearing load is calculated from the displacement amount of the bearing and the eccentricity of the journal is found by a mobility method.

(3) Then, the obtained eccentricity is used in transmission matrix calculations, and the inclination of the journal and a bearing load at the next crank angle step are found.

(4) Finally, the operations (1) to (3) described above are repeated over one cycle, and the repetition may continue till the difference between the eccentricity amount at a crank angle of 0° and the eccentricity amount at a crank angle of 360° becomes no more than a certain set value. Usually a sufficient convergence is achieved in three to four repetitions.

By the above-described procedure, shaft inclinations or eccentricities of the shaft bodies (journals) in all the bearings within one cycle are found.

Thus, in the case where the shaft body 2 is displaced in a plane perpendicular to the rotation axis of the shaft body 2 during the rotation of the shaft body 2 and a direction in which the displacement is large, that is, the direction of maximum displacement, is in the vicinity M of the mating plane of the upper and lower split metals 12, 13, the lubrication groove 14 formed in the circumferential direction on the upper split metal 12 side of the bearing metal 11, is not disposed in the vicinity M of the mating plane. Therefore, even when friction heat is generated in the direction of maximum displacement, a lubricating oil is not directly supplied. As a result, thermal strains are reduced and, therefore, the occurrence of damage such as peeling in the bearing metal can be prevented. In this case, the lower lubrication groove 15 provided in the lower split metal. 13, is formed in the vicinity M of the mating plane on the opposite side to the direction of maximum displacement, for example, within a range of substantially 10°, a lubricating oil is supplied to a portion where friction heat is not generated, and the lubrication function is maintained.

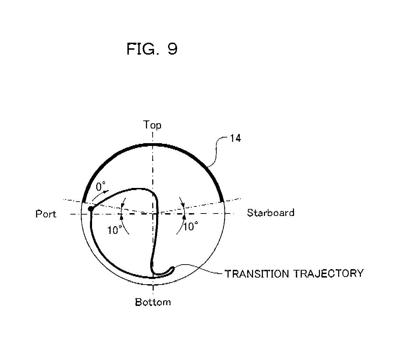

In the above-described embodiment, in the case where the direction of maximum displacement of the rotating shaft body is in the vicinity M of the mating plane or the portion N thereabove, the upper lubrication groove 14 is not disposed at least in the vicinity M of the mating plane of the upper split metal 12 in the direction of maximum displacement or in the portion N thereabove, but the upper lubrication groove may not also be disposed in the same range on the opposite side, as shown in FIG. 9. Therefore, in this case, the lubrication groove is not formed in the lower split metal 13.

## Claims

1. A bearing metal that has a vertically split structure composed of an upper split metal and a lower split metal, supports a rotating shaft body, and has a lubrication groove formed in an inner circumferential surface, wherein
in a case where a direction of maximum displacement of the rotating shaft body in a plane perpendicular to a rotation axis of the rotating shaft body during rotation of the rotating shaft body is in a vicinity of a mating plane of the upper and lower split metals, the lubrication groove formed in a circumferential direction on the upper split metal side is not disposed at least in the vicinity of the mating plane, and
the lubrication groove formed in the circumferential direction on the lower split metal side is disposed in the vicinity of the mating plane on an opposite side to the direction of maximum displacement.

2. A bearing metal that has a vertically split structure composed of an upper split metal and a lower split metal, supports a rotating shaft body, and has a lubrication groove formed in an inner circumferential surface, wherein
in a case where a direction of maximum displacement of the rotating shaft body in a plane perpendicular to a rotation axis of the rotating shaft body duping rotation of the rotating shaft body is above a mating plane of the upper and lower split metals, the lubrication groove formed in a circumferential direction on an upper split metal side is not disposed at least from the mating plane in the direction of maximum displacement to an upper portion above a vicinity of the mating plane.

3. A bearing metal that has a vertically split structure composed of an upper split metal and a lower split metal, supports a rotating shaft body, and has a lubrication groove formed in an inner circumferential surface, wherein
in a case where a direction of maximum displacement of the rotating shaft body in a plane perpendicular to a rotation axis of the rotating shaft body during rotation of the rotating shaft body is above a mating plane of the upper and lower split metals, the lubrication groove formed in a circumferential direction on an upper split metal side is not disposed at least from the mating plane in the direction of maximum displacement to an upper portion above a vicinity of the mating plane, and
the lubrication groove formed in the circumferential direction on a lower split metal side is disposed in the vicinity of the mating plane on an opposite side to the direction of maximum displacement.

4. The bearing metal according to any one of claims 1 to 3, wherein the direction of maximum displacement is within a range in which an eccentricity of the rotating shaft body with respect to the bearing metal is equal to or more than 0.9.

5. The bearing metal according to any one of claims 1 to 3, wherein the vicinity of the mating plane is within a range of substantially ±10° with respect to the mating plane.

6. The bearing metal according to claim 2 or 3, wherein the upper portion is within a range that is further substantially 10° from the vicinity of the mating plane.
